# EUROPEAN PATENT SPECIFICATION

(11) **EP 2 509 921 B1**
(45) Date of publication and mention of the grant of the patent: **06.09.2017**
(21) Application number: 10751714.6
(22) Date of filing: 20.07.2010
(51) Int. Cl.: C01G 45/02, C01G 49/06, B01J 23/00

(54) **THE METHOD OF OBTAINING TERNARY CHEMICAL COMPOUNDS BASED ON IRON OXIDE AND MANGANESE OXIDE**
VERFAHREN ZUR HERSTELLUNG TERNÄRER CHEMISCHER VERBINDUNGEN AUF DER BASIS VON EISENOXID UND MANGANOXID
PROCÉDÉ PERMETTANT D'OBTENIR DES COMPOSÉS CHIMIQUES TERNAIRES À BASE D'OXYDE DE FER ET D'OXYDE MANGANÈSE

(30) Priority: 10.12.2009 PL 38985309; 07.07.2010 PL 39177010
(43) Date of publication of application: 17.10.2012
(73) Proprietor: Instytut Chemicznej Przeróbki Wegla, 41-803 Zabrze (PL)
(72) Inventor: KSEPKO, Ewelina, 41-100 Siemianowice Slaskie (PL); FIGA, Jan, 41-803 Zabrze (PL); SCIAZKO, Marek, 40-558 Katowice (PL); LABOJKO, Grzegorz, 41-914 Bytom (PL)
(74) Representative: Korga, Leokadia
(86) International application number: PCT/IB2010/053297
(87) International publication number: WO 2011/070450

(56) References cited:
- FR-A1- 2 924 035
- "Projekt badawczy zamawiany Nr PBZ-MEiN-2/2/2006 pt.: "Chemia perspektywicznych procesów i produktów konwersji wegla""[Online] 2 February 2006 (2006-02-02), XP002605712 Retrieved from the Internet: URL:www.ichpw.zabrze.pl/cms.php?getfile=88 1> [retrieved on 2010-10-17]
- ADANEZ J ET AL: "Selection of oxygen carriers for chemical-looping combustion" ENERGY & FUELS, THE SOCIETY, WASHINGTON, DC, US, vol. 18, no. 2, 1 March 2004 (2004-03-01), pages 371-377, XP002484337 ISSN: 0887-0624 DOI: 10.1021/EF0301452 [retrieved on 2004-01-09]
- A. Lyngfelt et al.: "Chemical looping combustion: status of developpment"[Online] 16 May 2008 (2008-05-16), XP002605775 9th International conference on circulating fluidized beds (CFB-9) May 13-16, 2008 Retrieved from the Internet: URL:http://www.entek.chalmers.se/~anly/co2 /75_CFB9_CLCStatus.pdf> [retrieved on 2010-10-17]
- SUNG REAL SON ET AL: "Chemical-Looping Combustion with NiO and Fe2O3 in a Thermobalance and Circulating Fluidized Bed Reactor with Double Loops" INDUSTRIAL & ENGINEERING CHEMISTRY RESEARCH, vol. 45, no. 8, 1 January 2006 (2006-01-01), pages 2689-2696, XP003022051 AMERICAN CHEMICAL SOCIETY, US ISSN: 0888-5885 DOI: 10.1021/IE050919X
- HOSSAIN M M ET AL: "Chemical-looping combustion (CLC) for inherent CO2 separations-a review" CHEMICAL ENGINEERING SCIENCE, OXFORD, GB, vol. 63, no. 18, 1 September 2008 (2008-09-01), pages 4433-4451, XP025467861 ISSN: 0009-2509 DOI: 10.1016/J.CES.2008.05.028 [retrieved on 2008-05-29]

## Description

The subject of the invention consist of the method of obtaining ternary chemical compounds based on iron oxide and manganese oxide used in the processes of chemical oxygen transport in an oxide loop during fuels combustion or gasification described in Polish patent application No P-389853 and in an additional application No P-391770 supplemented by additional parameters of the method and additional substrates.

The necessity to improve the efficiency of thermochemical coal conversion processes with simultaneous drastic reduction of their adverse environmental impact (including CO₂ and NOₓ emissions) makes that intensive research on the improvement of the existing and development of new processes directed inter alia at the oxygen combustion and gasification of fuels is carried out worldwide. The use of a chemical looping is one of promising development directions for combustion and gasification processes, which allows achieving high conversion efficiencies and is economically attractive. In those processes a direct contact of the fuel with oxygen from the air is prevented. The oxygen transport is carried out by means of a circulating solid oxygen carrier obtained based on metal oxides.

In chemical looping oxide methods of fuel combustion or gasification, nitrogen does not exists, both in the flue gas and in the gases generated as a result of conversion. In conventional methods of energy generation from fossil fuels it dilutes the flue gas or process gas produced, thereby increasing their volume.

Many possible oxygen carriers are known, including various compositions of copper, manganese, iron or nickel oxides used as active materials and aluminium oxide, titanium dioxide, zirconium dioxide used as an inert material. Inert materials are added at the amount from a few to a few dozen wt.% in relation to the active material, due to which the oxide carriers life is extended, inter alia via the reduction of their abrasion.
From Ordered research project No PBZ-MEiN-2/2/2006 entitled "Chemia perspektywicznych procesów i produktów konwersji w 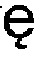 gla" 2 Ferbruary 2006 XP002605712, the melting point of 1420°C, proving a high thermal strength of 20% Fe₂O₃, 60% MnO₂, 20% sepiolite material is known.
From patent description FR 2 924 035 A1 (Roux Sebatien (fr); BIO 3D APPLIC (FR) 29 May 2009 preparation of monometallic oxygen carrier for example 40 wt.% Fe₂O₃ + 60 wt.% Al₂O₃, or 20 wt.% CuO + 80 wt.% TiO₂ by calcination of oxides with 5 to 20% graphite is known. The preparation of oxides is specified by carrying out one stage calcination of 2 given oxides at a temperature between 650 to 1050°C during 3 to 9 hours.
According to the paper Adanez J. et al. entitled "Selection of oxygen carriers for chemical-looping combustion" Energy & Fuels, The Society, Washington, DC, US LNKD-DOI; 10,1021/EF0301452, vol. 18, no. 2, 1, 2004, the monometallic oxygen carriers consisting of one active metal oxide (e.g. Fe₂O₃, or CuO, or NiO, or MnO₂) and one inert oxide (SiO₂, or Al₂O₃ or TiO₂ or ZrO₂) are obtained in the one stage calcination process. The pure chemicals (oxides) are calcined at the temperature between 950 and 1300°C not exceeding 6 hours.

The paper "Characterisation of oxygen carriers for chemical looping combustion" published during the Seventh International Conference in Vancouver, Canada in 2004 shows that the use of oxygen carriers consisting of one active and one inert component is known. While the known methods of oxygen carriers obtaining for a chemical looping is based on one-stage calcination process and not exceeding the period of 6 hours.
The chemical looping was initially used for the process of gaseous fuels combustion; later on it was expanded onto solid fuels combustion (including biomass and coal).

The invention is aimed at the method of obtaining ternary chemical compounds based on iron oxide and manganese oxide, useful for the process of oxygen transport in a chemical looping, of more favourable reactivity parameters and primarily of better oxygen transport capacity.
The method of obtaining ternary chemical compounds based on iron oxide and manganese oxide, consisting in mixing the initial components, calcination the mix at a high temperature, acc. to the invention is characterised by the fact that powdered graphite at the amount of 1 to 25 wt.% in relation to the initial mix is added to the initial components in the form of Fe₂O₃ and MnO₂ and an inert material, used in proportions resulting from a general chemical formula ∑ (***X***_{Fe2O3} + ***Y***_{MnO2} + ***Z***_{inert material}) = 100 wt.%, where **X** and **Y** are within the ranges 1≤x≤99, 1≤y≤99 and the inert material is used at the amount supplementing to 100 wt.%, and the whole is subject to at least one - stage calcination in an oxidising atmosphere at a temperature of 800 - 1500°C during 8 to 24 hours. What is favourable, the input components are subject to at least two-stage calcination in an oxidising atmosphere at the temperature of 1050°C during 24 hours.
What is favourable, the inert material consists of sepiolite and/or ZrO₂ and/or TiO₂ and/or Al₂O₃ and/or SiO₂.
What is favourable, X assumes values of 20, 30, 40, 60 wt.% and Y assumes values of 60, 50, 40, 20 wt.%.
What is favourable, 10 wt.% of powdered graphite are added to the mix.
What is favourable, inorganic heat-resistant minerals or their mixture is the inert material.
What is favourable, bentonite or sepiolite or any mixture of them is the inert material.
What is favourable, up to 10 wt.% of powdered graphite is added to the mixture of oxides and inert materials.
What is favourable, once the process of high-temperature calcination is completed the process of controlled cooling at a temperature decrease rate from 1000°C/minute to 1°C/minute is carried out.
What is favourable, the input components consist of chemical compounds containing iron and/or manganese, from which iron and manganese oxides are obtained as a result of calcination in an oxidising atmosphere.

The basic merit of the invention is the fact that from metal oxides due to the mechanical mixing and calcination the oxide materials are obtained, which are oxygen carriers featuring better capacity of oxygen transport, more favourable parameters of reactivity with fuel (in the combustion/gasification reaction) and with oxygen from the air (at the stage of carrier regeneration).

Using the method acc. to the invention, the oxygen transport capacity was obtained at the amount of 4 - 20 wt.%, the material's attrition value from 0.6 to 5.4%, and the melting temperature in a reducing atmosphere above 1100°C. This was achieved because of using two active components and one inert component, which are the basic components of the oxygen carrier. The use of such system enabled primarily the obtaining of more perfect oxide materials by increasing their reactivity with fuel (in the combustion/gasification reaction) and increasing their life due to reducing their attrition and weakening their tendency to agglomerate.

Moreover, they enable carrying out thermochemical reactions in lower temperature ranges. In general, complex oxygen carriers feature a better reactivity.

The method of manufacturing acc. to the invention is simple in the practical application and gives repeatable results, enables obtaining oxygen carriers for chemical oxygen looping purposes with a possibility of free mixing of active and inert components of the input products, which is not ensured by other methods, e.g. impregnation, which in this respect are very limited by the amount of active component fed, frequently up to the amount of ca. 20 wt.%. Appropriate calcination (with adequately chosen calcination time and temperature) enables increasing the oxide product life due to reducing its abrasion and favourable weakening their tendency to agglomerate and increasing the homogeneity of the obtained product. Thereby this has a favourable impact on the costs of fuels combustion or gasification processes, which are reduced due to their increased reactivity and life.
In addition, the possibility to use inorganic heat-resistant minerals and chemical compounds containing iron and/or manganese results in the improvement to the economic efficiency
The graphite addition to the blend caused that during calcination at the temperature of 1050°C in the air atmosphere it is subject to oxidation to carbon dioxide, which release results in an increase in: specific surface area, the conversion and the reaction rate.

In addition, the possibility to use inorganic heat-resistant minerals and chemical compounds containing iron and/or manganese results in the improvement to the economic efficiency.

The selection of components' proportions is related to the obtaining of valuable, for a chemical oxide loop, oxides properties considering the reduction of their production costs.

The method acc. to the invention has been described in non-restrictive examples of implementation.
The following components have been used as raw materials to obtain oxygen carriers:
Fe₂O₃ (purity ≥ 99%), MnO₂ (purity ≥ 90%), sepiolite, Al₂O₃ (purity ≥ 99.7%), ZrO₂ (purity ≥ 99%), SiO₂ (purity ≥ 99%), synthetic graphite.

### Example 1

The method of obtaining ternary chemical compounds consists in mixing 60 g of Fe₂O₃, 20 g of MnO₂, 20 g of sepiolite and 10 g of graphite. The components were rubbed with distilled water till obtaining the grain size below 100 µm. After drying the blend was calcined. The calcination was carried out during 24 hours at the temperature of 1050°C. Then obtained the blend was milled again and calcined at the temperature of 1050°C during 24 hours. As a result, a sample was obtained of composition 60 wt.% of Fe₂O₃, 20 wt.% of MnO₂, 20 wt.% of sepiolite.

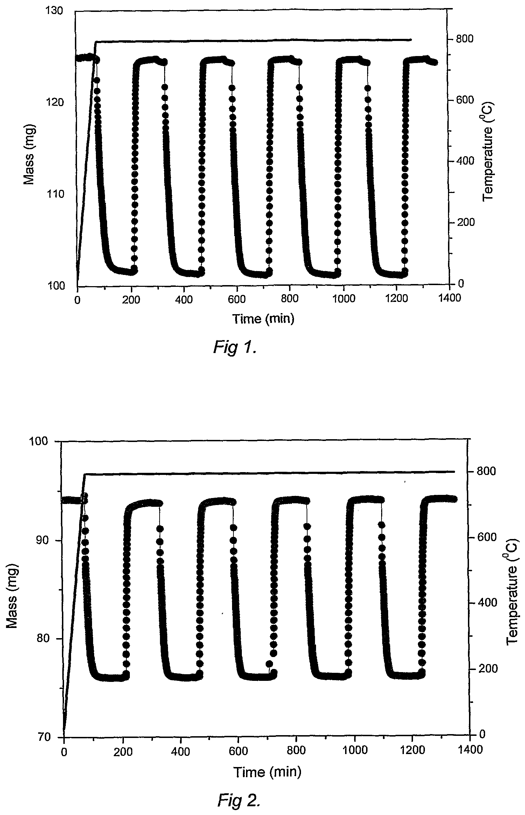

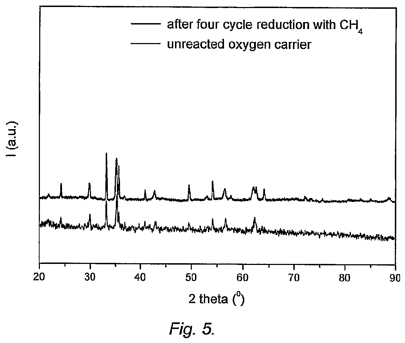

The oxygen carriers obtained in this way feature:
- high oxygen transport capacity of 18.75% (at the temperature of 800°C),
- specific surface area BET equal to 1.307 m²/g,
- low attrition 1.2%,
- good regeneration capacity (Fig. 1, Fig. 5),
- repeatability of results,
- the fact that the optimum range of preparation work falls within the temperature range of 600 - 900°C,
- high thermal resistance; the fusion temperatures in a reducing atmosphere amounted to: sintering point 1110°C, softening point 1350°C, melting temperature 1420°C, flow temperature 1500°C,
- low tendency to agglomerate, because 90% of the material produced was a fraction < 202 µm,
- a short oxidation and reduction time, where 90% of the fraction gets oxidised within 10.5 minutes, reduced within 24.4 minutes for "clean syngas" and was oxidised within 7.64 minutes and reduced within 14.79 minutes using syngas contaminated with hydrogen sulphide,
- actual density of 4.4 g/cm³,
- 100% ability for regeneration despite the syngas contamination with hydrogen sulphide,
- 100% ability of regeneration, after the reaction of methane combustion no problems with deactivation with carbon were observed.

### Example 2

The method of obtaining ternary chemical compounds consists in mixing 60 g of Fe₂O₃, 20 g of MnO₂, 20 g of ZrO₂ and 10 g of graphite. After the components mixing the blend was twice calcined during 24 hours, where the calcinations temperature amounted to 1050°C. As a result, a sample was obtained of chemical composition 60 wt.% of Fe₂O₃, 20 wt.% of MnO₂, 20 wt.% of ZrO₂.

The oxygen carriers obtained feature:
- high oxygen transport capacity of 18.99% (at the temperature of 800°C),
- specific surface area BET equal to 0.771 m²/g,
- a short oxidation and reduction time, where 90% of the fraction gets oxidised within 9.9 minutes, reduced within 16.6 minutes for "clean syngas" and within was oxidised 7.64 minutes and reduced within 12.3 minutes using syngas contaminated with hydrogen sulphide,
- good regeneration capacity (Fig. 2),
- 100% capacity for regeneration despite the syngas contamination with hydrogen sulphide,
- 100% capacity of regeneration, after the reaction of methane combustion no problems with deactivation with carbon were observed,
- high thermal resistance; where the fusion temperatures in a reducing atmosphere amounted to: sintering point 1100°C, softening point 1520°C, melting temperature 1530°C, flow temperature 1540°C,
- low attrition 1.4 %,
- the scope of the compound use is optimal in the temperature range of 600 - 900°C,
- low tendency to agglomerate, where 90% of the blend was a fraction < 98.2 µm,
- actual density of 5.2 g/cm³,
- repeatability of results.
X-ray powder patterns for a "fresh" oxygen carrier, i.e. not subject to any processes and converted with fuel (methane) and then regenerated with oxygen from the air, prove a very good regeneration capacity of samples of oxygen carriers based on iron and manganese oxide.

These advantages have been confirmed by product analyses, including investigations of: X-ray diffraction on powder samples (XRD), thermogravimetry coupled with a quadrupole mass spectrometer (TG-QMS), fusion temperatures, abrasion, grain size distribution, actual density, specific area using the BET method.

The manufacture method specified guarantee that the conversion of substrates used ranges from 80 to 100%.

The oxygen transport capacity is defined as the difference between the oxidised and reduced mass of the solid oxygen carrier Δ = mₒₓ - mᵣₑ (wt.%). In practice this means the amount of oxygen transferred from the oxygen carrier to the fuel.
To determine the oxygen transport capacity of the obtained solid oxygen carriers based on transition metals, cyclical examinations were carried out in oxidising (synthetic air) and reducing (syngas consisting of 36% CO, 27% H₂, 12% CO₂, 25% He, and 38% CO, 30.8% H₂, 13% CO₂, 17.8% He, 4042 ppm H₂S and 3% CH₄/Ar) conditions by means of the coupled TG-QMS technique using a TA Model 2050 thermobalance and a Netzsch STA 409 PC Luxx thermobalance coupled with an Aëolos QMS 403C quadrupole mass spectrometer, where the mass spectrometry has been used to control substrates and to identify the waste gases.
The process of chemical looping was simulated this way using a thermogravimetric analysis.

For example, Fig. 1 gives results of cyclical thermogravimetric examinations for a sample of 60 wt.% of Fe₂O₃, 20 wt.% MnO₂, 20 wt.% of sepiolite, carried out for the temperature of 800°C.
Table 1 presents the oxygen transport capacity versus the composition of selected binary and ternary oxygen carriers based on iron and manganese oxide.

To determine the abrasion granules, 4 mm in diameter each, were prepared from the obtained preparations. They were pressed using a hydraulic press with a pressure of 1300 kg/cm². The granules were then sintered at the temperature of 1050°C. Previously prepared granules were subject to attrition testing acc. to a modified procedure based on the standard EN 12915-2:2009.

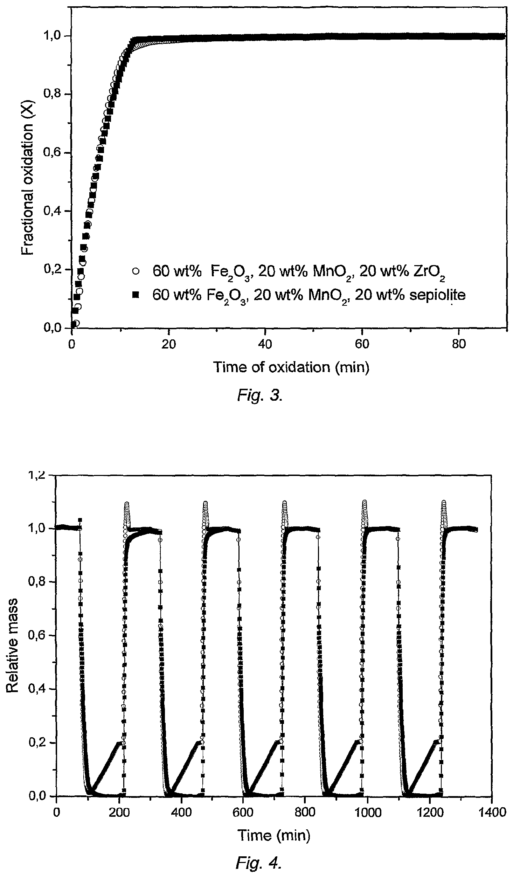

Graphs presented below in Fig. 1, Fig. 2, Fig. 3, Fig. 4, Fig. 5 show appropriate results of examinations, of which:
Fig. 1 - Results of cyclical thermogravimetric examinations 60 wt.% of Fe₂O₃, 20 wt.% of MnO₂, 20% wt.% of sepiolite, using syngas as the fuel,
Fig. 2 - Results of cyclical thermogravimetric examinations 60 wt.% of Fe₂O₃, 20 wt.% of MnO₂, 20 wt.% of ZrO₂, using syngas as the fuel,
Fig. 3 - Degree of oxidation (regeneration) versus time,
Fig. 4 - Results of cyclical thermogravimetric examinations 60 wt.% of Fe₂O₃, 20 wt.% of MnO₂, 20 wt.% of ZrO₂, using "clean" syngas as the fuel ---- and contaminated with hydrogen sulphide ----,
Fig. 5 - X-ray powder patterns for the oxygen carrier containing 60 wt.% of Fe₂O₃, 20 wt.% of MnO₂, 20% wt.% of sepiolite, not subjected to any processes and after its regeneration.
Fig.6 presented Table 1. Oxygen transport capacity versus the chemical composition.

### Example 3

The method of obtaining ternary chemical compounds consists in mixing 20 g of Fe₂O₃, 60 g of MnO₂, 20 g of ZrO₂, and 8 g of graphite. The components were rubbed with distilled water till obtaining the grain size below 100 µm. After drying the blend was calcined. The calcination was carried out during 20 hours at the temperature of 850°C. Then the blend obtained was milled again with 8 g of graphite and calcined again at the temperature of 850°C during 20 hours. As a result, a sample was obtained of composition 20 wt.% of Fe₂O₃, 60 wt.% of MnO₂, 20 wt.% of ZrO₂.

The oxygen carriers obtained in this way feature:
- high oxygen transport capacity of 6.5% (at the temperature of 800°C),
- specific area BET equal to 1.355 m²/g,
- low abrasion 1.0 %,
- good capacity of regeneration,
- repeatability of results,
- the fact that the optimum range of preparation work falls within the temperature range of 600 - 1500°C,
- high thermal resistance; the melting temperature in a reducing atmosphere amounted to: 1520°C,
- low tendency to agglomerate, because 90% of the material produced was a fraction < 65 µm,
- a short oxidation and reduction time, where 90% of the fraction gets oxidised within 6.05 minutes, reduced within 10.8 minutes for "clean syngas" and was oxidised within 1.56 minutes and reduced within 6.85 minutes using syngas contaminated with hydrogen sulphide,
- 97% capacity for regeneration despite the syngas contamination with hydrogen sulphide,
- 100% capacity of regeneration, after the reaction of methane combustion no problems with deactivation with carbon black were observed.

### Example 4

The method of obtaining ternary chemical compounds consists in mixing 40 g of Fe₂O₃, 40 g of MnO₂, 20 g of Al₂O₃, and 9 g of graphite. The components were rubbed with distilled water till obtaining the grain size below 100 µm. After drying the blend was calcined. The calcination was carried out during 8 hours at the temperature of 800°C. Next the blend obtained was milled again with 9 g of graphite and calcined at the temperature of 820°C during 8 hours. Then the blend obtained was milled again with 9 g of graphite and calcined at the temperature of 820°C during 8 hours. As a result, a sample was obtained of composition 40 wt.% of Fe₂O₃, 40 wt.% of MnO₂, 20 wt.% of Al₂O₃.

The oxygen carriers obtained in this way feature:
- high oxygen transport capacity of 13.2% (at the temperature of 800°C),
- specific area BET equal to 1.355 m²/g,
- low attrition 0.7 %,
- good capacity of regeneration,
- repeatability of results,
- the fact that the optimum range of preparation work falls within the temperature range of 600 - 1500°C,
- high thermal resistance; the melting temperature in a reducing atmosphere amounted to: 1640°C,
- low tendency to agglomerate, because 90% of the material produced was a fraction < 103 µm,
- a short oxidation and reduction time, where 90% of the fraction gets oxidised within 12.7 minutes, reduced within 13.3 minutes for "clean syngas" and was oxidised within 3.2 minutes and reduced within 8.14 minutes using syngas contaminated with hydrogen sulphide,
- 98% capacity for regeneration despite the syngas contamination with hydrogen sulphide,
- 100% capacity of regeneration, after the reaction of methane combustion no problems with deactivation with carbon were observed.

## Claims

1. The method of obtaining ternary chemical compounds based on iron oxide and manganese oxide, consisting in mixing the initial components, calcinating the blend at a high temperature, **is characterised in that** powdered graphite at the amount of 1 to 25 wt.% in relation to the initial blend is added to the initial components in the form of Fe₂O₃ and MnO₂ and an inert material, used in proportions resulting from a general chemical formula ∑ (***X***_{Fe2O3} + ***Y***_{MnO2} + ***Z***_{inert material}) = 100 wt.%, where **X** and **Y** are within the ranges 1≤x≤99, 1≤y≤99 and the inert material is used at the amount supplementing to 100 wt.%, and the whole is subject to at least one -stage calcination in an oxidising atmosphere at a temperature of 800 - 1500°C during 8 to 24 hours.

2. The method acc. to claim 1 **is characterised in that** the input components are subject to at least two-stage calcination in an oxidising atmosphere at the temperature of 1050°C during 24 hours.

3. The method acc. to claim 1 and 2 **is characterised in that** the inert material consists of sepiolite and/or ZrO₂ and/or TiO₂ and/or Al₂O₃ and/or SiO₂.

4. The method acc. to claim 1 and 2 **is characterised in that** X assumes values of 20, 30, 40, 60 wt.% and Y assumes values of 60, 50, 40, 20 wt.%.

5. The method acc. to claim 1 **is characterised in that** 10 wt.% of powdered graphite are added to the mix.

6. The method acc. to claim 1 **is characterised in that** inorganic heat-resistant minerals or their mixture is the inert material.

7. The method acc. to claim 6 **is characterised in that** bentonite or sepiolite or any mixture of them is the inert material.

8. The method acc. to claim 1 and 7 **is characterised in that** up to 10 wt.% of powdered graphite is added to the mixture of oxides and inert materials.

9. The method acc. to claim 1 and 2 **is characterised in that** once the process of high-temperature calcination is completed the process of controlled cooling at a temperature decrease rate from 1000°C/minute to 1°C/minute is carried out.

10. The method acc. to claim 1 **is characterised in that** the input components consist of chemical compounds containing iron and/or manganese, from which iron and manganese oxides are obtained as a result of calcination in an oxidising atmosphere.

## Patentansprüche

1. Verfahren zur Herstellung der ternären chemischen Verbindungen auf Grund von Eisen- und Manganoxid, die auf dem Mischen der Anfangskomponente, Unterstellung der Mischung der Hochtemperaturröstung beruht, **dadurch gekennzeichnet, dass** pulverisierter Grafit in der Menge von 1 bis 25 Gewichtsprozente im Verhältnis zu Anfangsmischung in die Anfangskomponente in Form von Fe₂O₃ und MnO₂ und Inertmaterial hinzugefügt wird, die in den aus allgemeiner chemischen Formel ∑ (X_{Fe2O3} + Y_{MnO2} + Z_{Inertmaterial}) = 100 Gewichtsprozent resultierten Proportionen genutzt werden, wo sich X und Y in Intervallen 1≤x≤99, 1≤y≤99 befinden, und das Inertmaterial in der zu 100 Gewichtsprozent ergänzenden Menge genutzt wird und das Ganze wird mindestens Einetappenröstung in oxidierenden Atmosphäre in Temperatur von 800-1500°C innerhalb von 8-24 Stunden unterstellt.

2. Verfahren nach Anspruch 1 **dadurch gekennzeichnet, dass** Anfangskomponente mindestens Zweietappenröstung in der oxidierenden Atmosphäre in Temperatur von 1050°C innerhalb von 24 Stunden unterstellt werden.

3. Verfahren nach Anspruch 1 und 2 **dadurch gekennzeichnet, dass** das Inertmaterial Sepiolith und/ oder ZrO₂ und/ oder TiO₂ und/ oder Al₂O₃ und/ oder SiO₂ ist.

4. Verfahren nach Anspruch 1 und 2 **dadurch gekennzeichnet, dass** X Werte 20, 30, 40, 60 Gewichtprozent annimmt und Y nimmt Werte 60, 50, 40, 20 Gewichtprozent an.

5. Verfahren nach Anspruch 1 **dadurch gekennzeichnet, dass** 10 Prozentgewicht pulvertisierten Grafit zur Mischung hinzugefügt wird.

6. Verfahren nach Anspruch 1 **dadurch gekennzeichnet, dass** das Inertmaterial anorganische thermostabil Rohstoffe oder ihre Mischung sind.

7. Verfahren nach Anspruch 6 **dadurch gekennzeichnet, dass** das Inertmaterial Bentonit oder Sepiolith oder ihre beliebige Mischung ist.

8. Verfahren nach Anspruch 1 und 7 **dadurch gekennzeichnet, dass** bis 10 Gewichtsprozent verpulverten Grafit in die Mischung von Oxiden und Inertmaterialien hinzugefügt wird.

9. Verfahren nach Anspruch 1 und 2 **dadurch gekennzeichnet, dass** nach Beendigung des Verfahrens von Hochtemperaturröstung das Verfahren des kontrollierten Abkühlung mit Schnelligkeit der Temperatursenkung von 1000 °C/Minute bis 1°C/Minute geführt wird.

10. Verfahren nach Anspruch 1 **dadurch gekennzeichnet, dass** Anfangskomponente die chemischen Verbindungen sind, die in ihrer Zusammensetzung Eisen und/ oder Mangan beinhalten, aus denen im Resultat von Röstung in der oxydierenden Atmosphäre Eisen- und Manganoxide entstehen.

## Revendications

1. Méthode pour obtenir des composés chimiques ternaires à base d'oxyde de fer et d'oxyde de manganèse, consistant à mélanger des composants initiaux et chauffer le mélange à haute température, **caractérisé en ce que** de la poudre de graphite en quantité de 1 à 25 % en poids du mélange initial est ajouté aux composants de départ sous la forme de Fe₂O₃ et MnO₂ ainsi qu'un matériau inerte, utilisés dans des proportions dérivées de la formule chimique générale ∑ (X_{Fe2O3} + Y_{MnO2} + Z_{matériau inerte}) = 100%, où X et Y sont compris dans les gammes 1≤x≤99, 1≤y≤99 et complété par le matériau inerte pour obtenir 100% du poids, et le mélange est soumis à au moins une calcination en atmosphère oxydante entre 800 et 1500 °C pendant 8 à 24 heures.

2. Méthode selon la revendication 1 **caractérisé en ce que** les composés de départ subissent à minima 2 calcinations/chauffe en atmosphère oxydante à une température de 1050 °C pendant 24 heures.

3. Méthode selon la revendication 1 et 2 **caractérisé en ce que** le matériau inerte est du sépiolite et/ou ZrO₂ et/ou Al₂O₃ et/ou SiO₂.

4. Méthode selon la revendication 1 et 2 **caractérisé en ce que** valeur de X est 20, 30, 40, 60 % et la valeur de Y est 60, 50, 40, 20 %.

5. Méthode selon la revendication 1 et 2 **caractérisé en ce que** 10% en poids de poudre de graphite est ajouté au mélange.

6. Méthode selon la revendication 1 **caractérisé en ce que** des minéraux inorganiques résistant à la chaleur ou leurs mélanges constituent les matériaux inertes.

7. Méthode selon la revendication 6 **caractérisé en ce que** la sépiolite, la bentonite, ou un mélange quelconque de ceux-ci constituent les matériaux inertes.

8. Méthode selon la revendication 1 et 7 **caractérisé en ce que** 10% en poids de poudre de graphite est ajouté au mélange d'oxydes et matériaux inertes.

9. Méthode selon la revendication 1 et 2 **caractérisé en ce qu'un** refroidissement contrôlé à une vitesse de descente en température de 1 000°C/minute à 1 °C/minute est réalisé à la fin du processus de calcination à haute température.

10. Méthode selon la revendication 1 **caractérisé en ce que** les composants de départ sont des composés constitués du fer et/ou de manganèse, qui à la suite de la calcination dans l'atmosphère oxydante sont remplacée par des oxydes de fer et/ou de manganèse.
